# EUROPEAN PATENT SPECIFICATION

(11) **EP 2 157 311 B1**
(45) Date of publication and mention of the grant of the patent: **16.02.2011**
(21) Application number: 08425567.8
(22) Date of filing: 21.08.2008
(51) Int. Cl.: F02M 35/10

(54) **Intake manifold with hollow fastening screws for an internal combustion engine**
Saugrohr mit hohlen Befestigungsschrauben für einen Verbrennungsmotor
Collecteur d'admission doté de vis de fixation creuses pour moteur à combustion interne

(43) Date of publication of application: 24.02.2010
(73) Proprietor: Magneti Marelli S.p.A., Corbetta (MI) (IT)
(72) Inventor: Davitti, Andrea, 10121 Torino (IT); Schiavina, Giampaolo, 40133 Bologna (IT); Trani, Giovan Giuseppe, 40011 Anzola Emilia (IT)
(74) Representative: Maccagnan, Matteo

(56) References cited:
- WO-A-02/31341
- DE-A1- 10 302 928
- DE-A1- 10 319 236
- DE-A1- 19 543 317
- DE-A1- 19 636 579
- DE-C1- 3 643 196
- DE-U1-202006 008 313
- JP-A- 2002 205 138
- US-A- 2 549 393
- US-A- 3 200 485
- US-A- 4 776 313
- US-A1- 2002 189 567
- US-B1- 6 374 815

## Description

### TECHNICAL FIELD

The present invention relates to an intake manifold for an internal combustion engine.

### BACKGROUND ART

In modern internal combustion engines, the internal intake manifold is nearly always made of molded plastic material, because the intake manifold has a complex shape and is subject to neither mechanical nor thermal stress. A series of components (e.g. the butterfly valve) are mounted to a plastic body of the intake manifold and are fastened by means of a series of metal fastening screws; the assembly by means of fastening screws is required because it allows the subsequent disassembly of the components during the maintenance and repair interventions.

Each fastening screw is arranged in a first through hole obtained through the corresponding component to be fixed and in a second hole obtained through the body of the intake manifold; the second hole obtained through the body of the intake manifold may be blind and threaded and thus the fastening screw may be screwed into the second hole, or the second hole obtained through the body of the intake manifold may be a through hole and thus a nut is screwed at the end of the fastening screw which protrudes from the second hole.

The creep phenomenon occurs in a plastic material subjected to continuous pressure, i.e. the polymers of the plastic material tend to slide on each other determining a permanent deformation which reduces the size of the plastic material along the direction of the pressure. The creep phenomenon is particularly detrimental because it determines a progressive loss of gripping force of the fastening screws and with the time passing (several years of life of an internal combustion engine) may also cause the complete loss of gripping force. Furthermore, repeating the thermal cycles (heating and subsequent cooling) which occur in an internal combustion engine determines an acceleration of the creep phenomenon, which is therefore very evident and absolutely not negligible in the intake manifolds of the internal combustion engines.

In order to contrast the creep phenomenon, the through holes are normally provided with corresponding metal bushings, each of which serves the function of distributing the pressure exerted by the head of the fastening screw on the external surface of the plastic component; in virtue of the presence of the metal bushing, creep phenomena in the plastic material are avoided, i.e. a localized plastic deformation of the plastic component under the head of the fastening screw is avoided. However, the need to insert metal bushings into the through holes of the plastic components increases the overall cost of the plastic components themselves, both because of the provision costs of the bushings and because of the costs deriving from the assembly of the metal bushings.

Instead of using the metal bushings, it has been suggested to use aluminum fastening screws instead of the traditional steel fastening screws, because aluminum has a Young's elasticity modulus lower than that of steel; therefore, the gripping force being equal, an aluminum screw has a higher compression than a similar steel screw, and thus a greater plastic material deformation is required to loose the gripping force. However, aluminum screws are considerably more expensive than equivalent steel screws and thus their use is not very economical.

### DISCLOSURE OF INVENTION

It is the object of the present invention to provide an intake manifold for an internal combustion engine, which intake manifold is free from the above-described drawbacks, and specifically, is easy and cost-effective to be manufactured.

According to the present invention, an intake manifold for an internal combustion engine is provided as claimed in the appended claims.

### BRIEF DESCRIPTION OF THE DRAWINGS

The present invention will now be described with reference to the accompanying drawings, which show a non-limitative embodiment thereof, in which:
- figure 1 is a diagrammatic view of an internal combustion engine provided with a variable geometry intake manifold made according to the present invention and provided with a tumble-type choking system;
- figure 2 is a diagrammatic, perspective view with parts removed for clarity of a body of the intake manifold in figure 1; and
- figure 3 is a side view of a metal fastening screw of the intake manifold in figures 1 and 2.

### PREFERRED EMBODIMENTS OF THE INVENTION

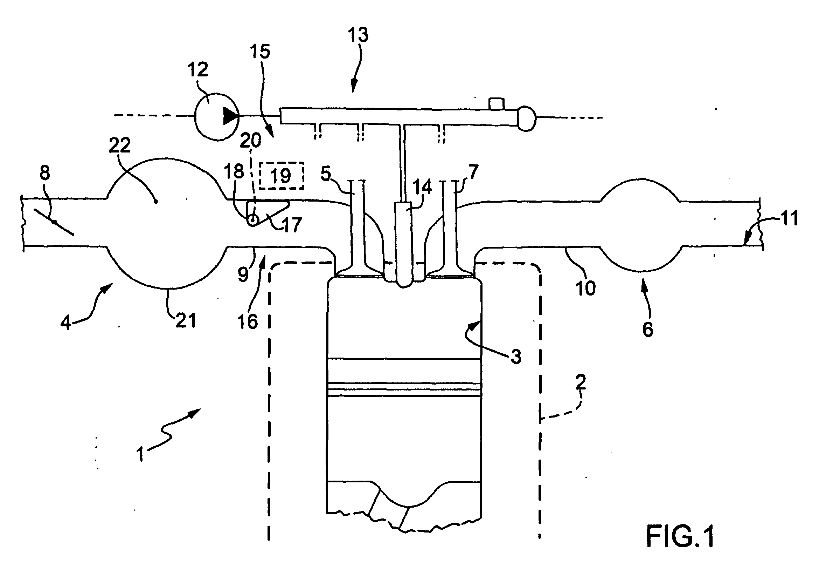

In figure 1, numeral 1 indicates as a whole an internal combustion engine provided with a head 2 in which four cylinders 3 are obtained (only one of which is shown in figure 1), each of which is connected to an intake manifold 4 by means of two intake valves 5 (only one of which is shown in figure 1) and to an exhaust manifold 6 by means of two exhaust valves 7 (only one of which is shown in figure 1).

The intake manifold 4 receives fresh air (i.e. air from the external environment) through a butterfly valve 8 movable between a closing position and a maximum opening position and is connected to the cylinders 2 by means of corresponding intake pipes 9 (only one of which is shown in figure 1), each of which is adjusted by the corresponding intake valves 8. Similarly, the exhaust manifold 5 is connected to the cylinders 2 by means of corresponding exhaust pipes 10 (only one of which is shown in figure 1), each of which is adjusted by the corresponding exhaust valves 6; an emission pipe 11 (partially shown), for releasing the gases produced by combustion into the atmosphere, departs from the exhaust manifold 5.

A low pressure pump (not shown) feeds the fuel (e.g. gasoline, diesel, methane or LPG) from a tank (not shown) to a high pressure pump 12, which in turn feeds the fuel to a common rail 13; a series of injectors 14 (one for each cylinder 3) are connected to the common rail 13, each of which is cyclically actuated to inject part of the pressurized fuel inside the common rail 13 into the corresponding cylinder 3.

The intake manifold 4 has a variable geometry and includes a choking system 15, which varies the air introduction section of the intake pipes 9 according to the speed of the engine 1 itself. According to the embodiment shown in figure 1, the choking system 15 is of the tumble type and for each intake pipe 9 includes a choking valve 16, which has a choking element 17 which is keyed onto a shaft 18 to rotate under the thrust of an actuator device 19 about a rotation axis 20 arranged transversally to the corresponding intake pipe 9. In use, each choking element 17 rotates under the thrust of the actuator device 19 between an active position, in which the choking element 17 reduces the air introduction section of the intake pipe 9, and a rest position, in which the choking element 17 does not determine any appreciable reduction of the air introduction section of the intake pipe 9.

Preferably, a single, common actuator device 19 is provided, which is mechanically connected to all the choking bodies 17 of the four choking valves 16; specifically, the choking bodies 17 of the four choking valves 16 are keyed onto a same common shaft 18 which receives the motion from the actuator device 19.

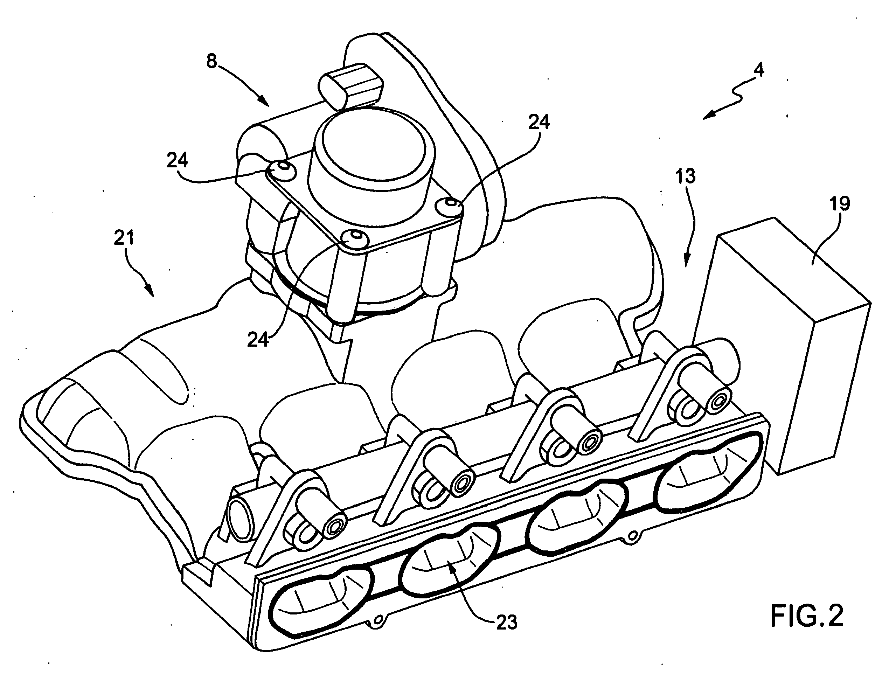

As shown in figure 2, the intake manifold 4 includes a body 21, which is made of injection-molded plastic material. A tubular intake chamber 22 which receives the fresh air from the external environment through the butterfly valve 8 is obtained in the body 21 of the intake manifold 4; furthermore, four intake pipes 9 are obtained in the body 21 of the intake manifold 4, each of which connects the intake chamber 22 to a corresponding cylinder 3 of the internal combustion engine 1 and ends with an outlet mouth 23 at a connecting flange adapted to be coupled to the head 2 of the internal combustion engine 1.

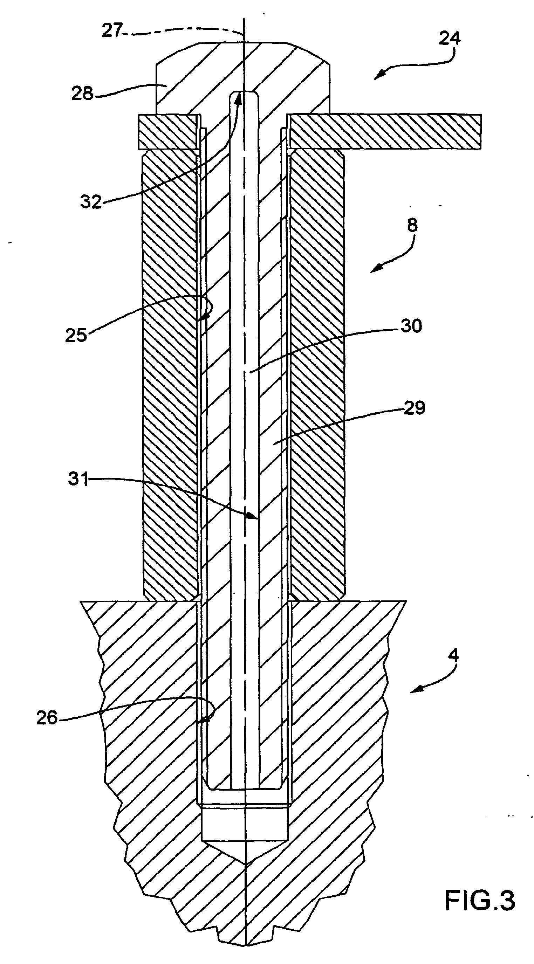

The butterfly valve 8 is also made of injection-molded plastic material and is connected to the intake manifold 4 by means of a plurality of fastening screws 24. As better shown in figure 3, each fastening screw 24 is made of metal, preferably steel, and is adapted to sandwich the butterfly valve 8 to the body 21 of the intake manifold 4. Specifically, each fastening screw 24 is inserted into a through hole 25 obtained through the butterfly valve 8 and inside a blind, threaded hole 26 obtained in the body 21 of the intake manifold 4.

Each fastening screw 24 has a longitudinal axis 27 and includes a cylindrical head 28 having a diameter greater than the diameter of the through hole 25, and a shank 29 having a diameter smaller than the diameter of the through hole 25 and than the diameter of the blind hole 26, and further having a threaded end portion.

The shank 29 of each fastening screw 24 further has an internal cylindrical cavity 30 inside, which is coaxial to the longitudinal axis 27 and extends over the entire length of the shank 29 and partially into the head 28 of the fastening screw 24 itself. The internal cavity 30 is defined by a cylindrical side surface 31 which is coaxial to the longitudinal axis 27 and by a bottom surface 32, and is open at one end corresponding to the tip of the shank 29.

In the disclosed embodiment, the internal cavity 30 of each fastening screw 24 has a cylindrical shape, i.e. has a circular cross section; according to different, alternative embodiments (not shown), the internal cavity 30 of each fastening screw 24 might have a cross section other than the circular section (e.g. a cross-shaped section or a square section).

Preferably, each above-described fastening screw 24 is of the self-tapping type, i.e. is fastened into the blind hole 26, which is smooth as it is not threaded beforehand. It is worth noting that this type of self-tapping fastening screw 24 is particularly indicated in applications of this type is which the fastening screw 24 itself is used for coupling plastic material components, as the body 21 of the intake manifold 4 and the butterfly valve 8. Indeed, when screwed, these features allow the self-tapping fastening screw 24 to model the walls of the hole 26 by plastic deformation so as to obtain a joint adapted to ensure the hold of the fastening and an optimal strength.

According to a further embodiment (not shown), each hole 26 is not a blind hole but is a through hole which is coaxial to and aligned with the through hole 25; in this case, a nut is screwed at the end of the corresponding fastening screw 24 which protrudes from the hole 26. Obviously, in this case, the fastening screws 24 are not self-tapping.

The above-described intake manifold 4 has many advantages, because it is simple and cost-effective to be manufactured as it does not require to use metal bushings for internally lining the through holes 25 and, at the same time, is not very subject to the creep phenomenon at the fastening screws 24. Such a result is obtained in virtue of the fact that each fastening screw 24 has an internal cavity 30. The presence of the internal cavity 30 reduces the effective section of the shank 20 of the fastening screw 24 and thus increases the total longitudinal elasticity of the shank 29 itself; in this manner, the gripping force being equal, a fastening screw 24 having the internal cavity 30 has a higher compression than a similar steel fastening screw 24 and thus it requires a greater plastic material deformation in order to loose the gripping force. In other words, the fastening screw 24 having the internal cavity 30 has a behaviour completely similar to that of an aluminum fastening screw 24 despite being much more cost-effective than the similar aluminum fastening screw 24. Furthermore, the internal cavity 30 has a beneficial effect in increasing the overall longitudinal elasticity of the shank 29 of the fastening screw 24 and, at the same time, does not greatly reduce the capacity of the shank 29 to withstand twisting efforts which are generated when screwing the fastening screw 24; indeed, even in a solid shank 29 (i.e. without the internal cavity 30), the twisting efforts are nearly completely discharged onto the external crown of the shank 29 and do not concern the central core of the shank 29 itself.

## Claims

1. An intake manifold (4) for an internal combustion engine (1) provided with a head (2) in which a number of cylinders (3) are obtained; the intake manifold (4) includes:
a body (21) of the intake manifold (4) made of plastic material and in which an intake chamber (22), which receives fresh air from the external environment, and a number of intake pipes (9), each of which connects the intake chamber (22) to a corresponding cylinder (3) of the internal combustion engine (1), are defined;
a first hole (26) which is obtained in the body (21) of the intake manifold (4);
at least one component (8) which is supported by the body (21) of the intake manifold (4);
a second through hole (25) obtained through the component (8); and
at least one fastening screw (24) which has a head (28) and a shank (29) and is arranged in the second through hole (25) and in the first hole (26), in order to establish a mechanical connection between the body (21) of the intake manifold (4) and the component (8);
the intake manifold (4) is **characterized in that** the fastening screw (24) includes an internal cavity (30) which longitudinally and centrally extends inside the fastening screw (24) itself.

2. An intake manifold (4) according to claim 1, wherein the fastening screw (24) has a longitudinal axis (27) and the internal cavity (30) is coaxial to the longitudinal axis (27) itself.

3. An intake manifold (4) according to claim 1 or 2, wherein the internal cavity (30) extends over the entire length of the shank (29) of the fastening screw (24).

4. An intake manifold (4) according to claim 3, wherein the internal cavity (30) partially extends in the head (28) of the fastening screw (24).

5. An intake manifold (4) according to anyone of the claims from 1 to 4, wherein the internal cavity (30) has a cylindrical shape and a circular cross section.

## Patentansprüche

1. Ein Saugrohr (14) für einen Verbrennungsmotor (1) versehen mit einem Kopf (2), in dem eine Anzahl von Zylindern (3) enthalten sind, wobei das Saugrohr (4) folgendes aufweist:
einen Körper (21) des Saugrohrs (4) hergestellt aus Kunststoffmaterial, wobei im Körper (21) folgendes definiert ist:
eine Einlasskammer (22), die frische Luft aus der externen Umgebung erhält und eine Anzahl von Einlassrohren (9) deren jedes die Einlasskammer (22) mit einem entsprechenden Zylinder (3) des Verbrennungsmotors (1) verbindet;
ein erstes Loch (26), welches im Körper (21) des Saugrohrs (4) vorgesehen ist;
mindestens eine Komponente (8), die durch den Körper (12) des Saugrohrs (4) getragen wird;
ein zweites Durchgangsloch (25) vorgesehen durch die Komponente (8); und
mindestens eine Befestigungsschraube (24), die einen Kopf (28) und einen Schaft (29) besitzt und in dem zweiten Durchgangsloch (25) und in dem ersten Loch (26) angeordnet ist, um eine mechanische Verbindung zwischen dem Körper (21) des Saugrohrs (4) und der Komponente (8) vorzusehen; wobei das Saugrohr (4) **dadurch gekennzeichnet ist, dass** die Befestigungsschraube (24) einen Innenhohlraum (30) aufweist, der sich in der Befestigungsschraube (24) selbst, in Längsrichtung und mittig, erstreckt.

2. Ein Saugrohr (4) nach Anspruch 1, wobei die Befestigungsschraube (24) eine Längsachse (27) besitzt und wobei der Innenhohlraum (30) koaxial zur Längsachse (27) selbst verläuft.

3. Ein Saugrohr (4) nach Anspruch 1 oder 2, wobei der Innenhohlraum (30) sich über die gesamte Länge des Schafts (29) der Befestigungsschraube (24) erstreckt.

4. Ein Saugrohr (4) nach Anspruch 3, wobei der Innenhohlraum (30) sich partiell in den Kopf (28) der Befestigungsschraube (24) erstreckt.

5. Ein Saugrohr (4) nach einem der Ansprüche 1 bis 4, wobei der Innenhohlraum (30) eine zylindrische Form und einen Kreisquerschnitt aufweist.

## Revendications

1. Collecteur d'admission (4) pour un moteur à combustion interne (1) doté d'une culasse (2) dans laquelle sont réalisés un certain nombre de cylindres (3); le collecteur d'admission (4) comprend :
un corps (21) du collecteur d'admission (4) réalisé en matière plastique et dans lequel sont définis une chambre d'admission (22), qui reçoit de l'air frais de l'environnement extérieur, et un certain nombre de conduits d'admission (9), chacun reliant la chambre d'admission (22) à un cylindre (3) correspondant du moteur à combustion interne (1);
un premier trou (26) qui est réalisé dans le corps (21) du collecteur d'admission (4);
au moins un composant (8) qui est supporté par le corps (21) du collecteur d'admission (4);
un second trou traversant (25) réalisé à travers le composant (8); et
au moins une vis de fixation (24) munie d'une tête (28) et d'une tige (29) et disposée dans le second trou traversant (25) et dans le premier trou (26), afin d'établir une liaison mécanique entre le corps (21) du collecteur d'admission (4) et le composant (8);
le collecteur d'admission (4) est **caractérisé en ce que** la vis de fixation (24) comprend une cavité interne (30) qui s'étend en direction longitudinale et de manière centrale à l'intérieur de la vis de fixation (24) elle-même.

2. Collecteur d'admission (4) selon la revendication 1, dans lequel la vis de fixation (24) présente un axe longitudinal (27) et la cavité interne (30) est coaxiale à l'axe longitudinal (27) lui-même.

3. Collecteur d'admission (4) selon la revendication 1 ou 2, dans lequel la cavité interne (30) s'étend sur toute la longueur de la tige (29) de la vis de fixation (24).

4. Collecteur d'admission (4) selon la revendication 3, dans lequel la cavité interne (30) s'étend partiellement dans la tête (28) de la vis de fixation (24).

5. Collecteur d'admission (4) selon l'une quelconque des revendications 1 à 4, dans lequel la cavité interne (30) a une forme cylindrique et une section transversale circulaire.
